# EUROPÄISCHE PATENTSCHRIFT

(11) **EP 1 910 697 B1**
(45) Veröffentlichungstag und Bekanntmachung des Hinweises auf die Patenterteilung: **07.01.2009**
(21) Anmeldenummer: 06828791.1
(22) Anmeldetag: 01.07.2006
(51) Int. Cl.: F16D 41/06

(54) **HÜLSEN-/ ROLLENFREILAUF MIT EINEM KÄFIG FÜR DIE NADELN ODER ROLLEN**
ROLLER FREEWHEEL WITH A CAGE FOR THE NEEDLE OR ROLLER BEARINGS
ROUE LIBRE A DOUILLES/ROULEAUX PRESENTANT UNE CAGE POUR LES AIGUILLES OU LES ROULEAUX

(30) Priorität: 21.07.2005 DE 102005034039
(43) Veröffentlichungstag der Anmeldung: 16.04.2008
(73) Patentinhaber: Schaeffler KG, 91074 Herzogenaurach (DE)
(72) Erfinder: ALTMANN, Frieder, 96178 Pommersfelden (DE); DÖRRIE, Swen, 91074 Herzogenaurach (DE); RUFFERSHÖFER, Peter, 91074 Herzogenaurach (DE)
(86) Internationale Anmeldenummer: PCT/EP2006/006420
(87) Internationale Veröffentlichungsnummer: WO 2007/031131

(56) Entgegenhaltungen:
- DE-A1- 10 007 620
- FR-A- 2 266 828
- GB-A- 2 110 776
- GB-A- 2 225 067
- JP-A- 60 188 630
- US-A- 3 731 774
- US-A1- 2003 029 686

## Beschreibung

### Gebiet der Erfindung

Hülsen-/Rollenfreilauf, mit zumindest einem Innen- oder Außenring, der den Nadeln oder Rollen angepasste Klemmrampen aufweist, mit einem Käfig für die Nadeln oder Rollen und mit Andruckfedern.

### Hintergrund der Erfindung

Ein gattungsbildender Hülsenfreilauf ist aus dem "Technischen Handbuch" der INA Wälzlager Schaeffler oHG, 5. überarbeiteter Nachdruck, Seiten 270 und 271 in verschiedenen Ausführungen bekannt. Dokumente DE 100 07620, JP60188630, GB 2 225 067, US 3 731 774 und US 2003/029686 offenbaren auch einem gattungsbildenden Hülsen-/Rollenfreilauf. Diese Freiläufe weisen einen Außenring mit Klemmrampen auf, in dem ein Käfig mit Nadeln angeordnet ist, wobei Andruckfedern eingebaut sind, die den Kontakt der Nadeln mit den Klemmrampen und einem glatten Innenring bzw. einer Welle bei Verwendung ohne Innenring herstellen, damit ein schneller Eingriff des Freilaufs gegeben ist.

Derartige Hülsenfreiläufe haben sich bewährt und erfüllen alle an sie gestellten Aufgaben. Sie weisen jedoch eine größere Anzahl von Teilen auf, die kostenintensiv sind.

### Aufgabe der Erfindung

Aufgabe der Erfindung ist daher, den gattungsgemäßen Freilauf zu vereinfachen und zu verbilligen, ohne die bewährte Funktionstüchtigkeit zu beeinträchtigen.

### Zusammenfassung der Erfindung

Die Aufgabe der Erfindung wird dadurch gelöst, dass der Käfig Käfigelemente aufweist, die mit dem Innen- oder Außenring einstückig hergestellt sind. Der Außenring, an welchem die Nadeln oder Rollen des Freilaufs anliegen, wird auch als Hülse des Hülsen-/Rollenfreilaufs bezeichnet.

Innen- oder Außenring im Sinne der Erfindung bedeutet, dass, abgesehen von den Freiläufen gemäß dem Stand der Technik, bei dem im Außenring Klemmrampen vorgesehen, auch Freiläufe berücksichtigt werden sollen, bei denen auf der Außenfläche eines Innenrings die Klemmrampen vorgesehen sind und die Nadeln oder Rollen mit einer glatten Innenfläche eines Außenringes, also einer Hülse, in Wirkverbindung stehen.

Dadurch, dass der Innen- oder Außenring mit den Käfigelementen einstückig hergestellt ist, kann der als getrenntes Bauteil bekannte Käfig, an den große Maßgenauigkeit gestellt werden muss, entfallen.

Gemäß einer bevorzugten Ausgestaltung der Erfindung wird der Innen- oder Außenring mit Klemmrampen und Käfigelementen einstückig dadurch hergestellt, dass der Innen- oder Außenring mit den Klemmrampen und zumindest einem auf einer Seite der Klemmrampen angeordneten Rand tiefgezogen wird, dass aus dem Rand Feder-Haltenasen ausgeschnitten werden und dass die Feder-Haltenasen radial zum Innen- oder Außenring gebogen und die freistehenden Fahnen der Feder-Haltenasen in den Bereich der Klemmrampen umgelenkt werden.

Es sei darauf hingewiesen, dass nicht nur an einer Seite, sondern an beiden Seiten des Innen- oder Außenringes Ränder vorgesehen sein können, aus denen die Feder-Haltenasen ausgeschnitten werden, wobei beidseitig der Klemmrampen abwechselnd die Feder-Haltenasen gebogen und die Fahnen eingeklappt werden können.

In einer bevorzugten Ausgestaltung werden die Feder-Haltenasen nur aus einem Rand ausgeschnitten und dann entsprechend gebogen, während auf der gegenüberliegenden Seite der Klemmrampen am Innen- oder Außenring eine Ringschulter angeformt ist, die radial nach innen oder nach außen, je nach dem, ob es sich um einen Innenring oder einen Außenring handelt, angeformt ist. Durch diese Ausgestaltung stellt die Ringschulter auf der einen Seite die Führung der Nadeln oder auch größerer Rollen her, während die Feder-Haltenasen die Führung auf der anderen Seite sicherstellen und die eingeschwenkten Fahnen Stützen für Federn sind, die die Nadeln oder die Rollen in den Spalt zwischen Klemmrampen und glatter Gegenfläche drücken. Die Feder-Haltenasen können auf den den Fahnen abgewandten Seiten Verlängerungslaschen aufweisen, die die seitliche Führung der Nadeln oder Rollen sicherstellen bzw. verbessern.

Gemäß einer modifizierten Ausgestaltung der Erfindung wird der Innen- oder Außenring als topfförmiges Bauteil durch Tiefziehen hergestellt, wobei aus einem Bodenrand Fahnen ausgeschnitten werden, die in den Bereich der Klemmrampen umgebogen werden. Dadurch bleibt auch im Bereich des Bodenrandes eine durchgehende seitliche Begrenzung erhalten, die eine gute Führung der Nadeln und insbesondere größerer Rollen sicherstellt.

Je nach Krafteinwirkung auf den Freilauf und je nach Stärke des Innen- oder Außenringes kann der Innen- oder Außenring auf oder in einen auch als Spannring bezeichneten Stützring eingepresst werden, der eine Verstärkung des Innen- oder Außenrings sicherstellt. Auch dieser Stützring kann kostengünstig durch Tiefziehen hergestellt sein; ebenso ist eine spanende Formgebung möglich. Es sei aber ausdrücklich darauf hingewiesen, dass sowohl der Stützring als auch der auf beziehungsweise in diesem gehaltene Innen- oder Außenring gemäß der Erfindung auch als Bandmaterial hergestellt und zu einem Ring geformt werden kann, der dann an seinen Stoßstellen verbunden, z.B. verschweißt, werden kann. Es besteht auch die Möglichkeit, den Außenring, das heißt die typischerweise mit Klemmrampen versehene Hülse des Freilaufs unter Spannung innerhalb des geschlossenen Stützrings anzuordnen.

An dem Spannring, vorzugsweise vor dem Verpressen des Spannrings mit dem Innen- oder Außenring, wird bevorzugt ein radial nach innen oder außen vorstehender Bund angeformt, der einen definierten Anschlag zwischen Innen-oder Außenring einerseits und Spann- oder Stützring andererseits darstellt und je nach Größe auch die Feder-Haltenasen stützen und Zwischenräume zwischen diesen verschließen kann, da der Stützring und der Innen- oder Außenring vorzugsweise so miteinander verpresst werden, dass der Bund den Feder-Haltenasen benachbart ist.

### Kurze Beschreibung der Zeichnungen

Zur weiteren Erläuterung der Erfindung wird auf die Zeichnungen verwiesen, in denen ein Ausführungsbeispiel der Erfindung vereinfacht dargestellt ist.

Es zeigen:
- Figur 1: eine perspektivische Ansicht eines Außenrings mit neben den Klemmrampen angeordneten Rändern,
- Figur 2: eine perspektivische Darstellung entsprechend Figur 1, in der ein Rand bearbeitet und Feder-Haltenasen ausge- schnitten sind,
- Figur 3: eine perspektivische Darstellung entsprechend Figur 1, in der Fahnen der Feder-Haltenasen umgebogen sind,
- Figur 4: eine perspektivische Darstellung entsprechend Figur 1, in der zusätzlich auch die Feder-Haltenasen umgebogen sind,
- Figur 5: eine perspektivische Darstellung entsprechend Figur 4 mit Blickrichtung auf die gegenüberliegenden Seite.
- Figur 6: eine perspektivische Darstellung eines modifizierten Au- ßenringes bei dem aus einem abgewinkelten Rand Fahnen ausgeschnitten und umgebogen sind,
- Figur 7: eine perspektivische Darstellung entsprechend Figur 6 mit Blickrichtung auf die gegenüberliegende Seite und
- Figur 8: eine perspektivische Darstellung eines Außenringes mit eingesetzten Rollen und Andruckfedern, fertig montiert.

### Detaillierte Beschreibung der Zeichnungen

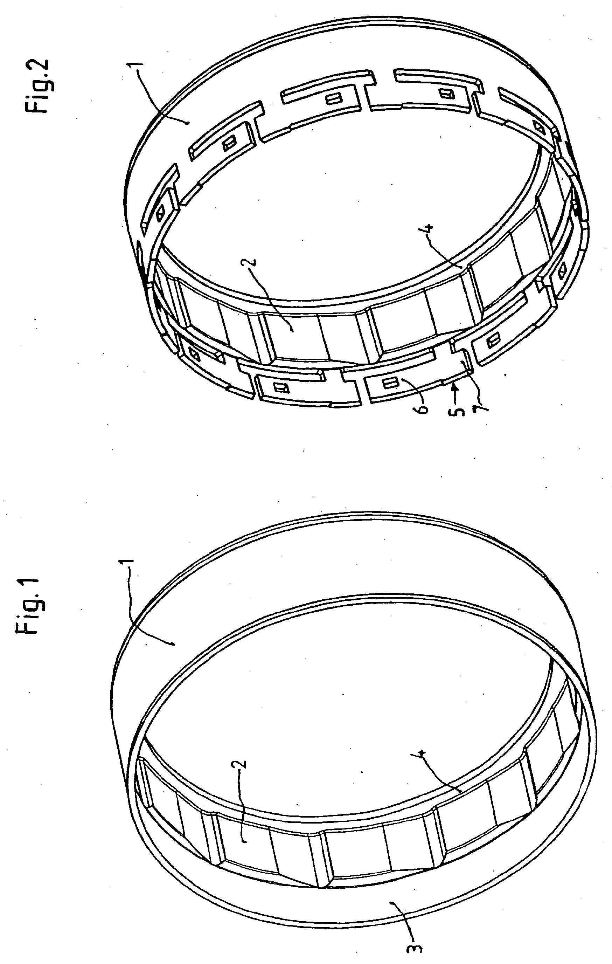

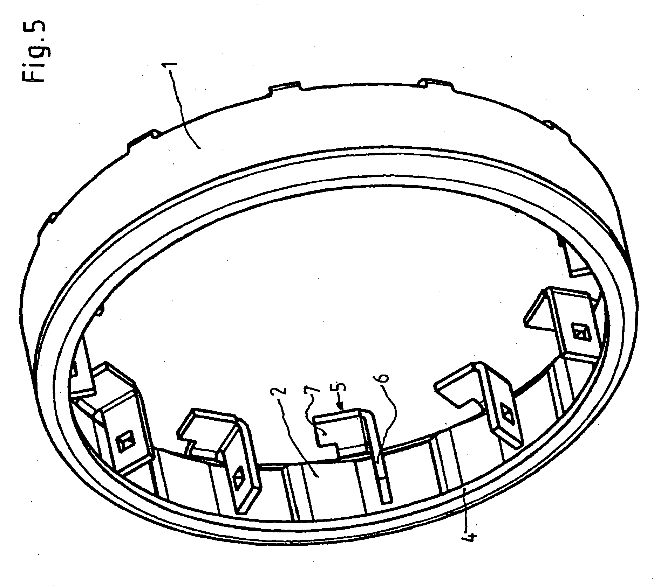

In den Figuren 1 bis 8 ist, soweit im Einzelnen dargestellt, mit 1 allgemein ein Außenring bezeichnet, der auf der Innenseite Klemmrampen 2 und daran anschließend Ränder 3 und 4 aufweist. Der Außenring 1 ist vorzugsweise als Hülse ausgebildet und durch Tiefziehen hergestellt. Er kann aber auch aus Bandmaterial hergestellt, durch Prägen geformt und anschließend als Ring gebogen sein, der an den Stoßstellen verschweißt ist.

Wie in Figur 2 dargestellt, werden aus dem Rand 3 Feder-Haltenasen 5 ausgeschnitten bzw. ausgestanzt und der Rand 4 als Ringschulter umgeformt, die radial nach innen vorsteht. Die Feder-Haltenasen 5 weisen an der einen Umfangsrichtung des Außenringes 1 Fahnen 6 und an der anderen Richtung Verlängerungslaschen 7 auf.

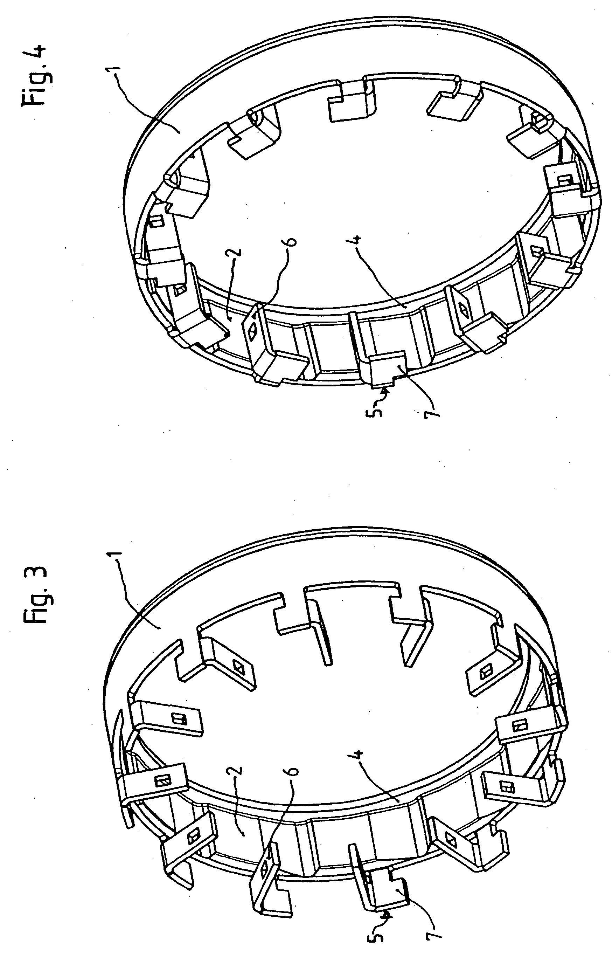

Anschließend werden, in Figur 3 dargestellt, die Fahnen 6 der Feder-Haltenasen 5 um ca. 90 Grad abgewinkelt und dann die Feder-Haltenasen 5 am Außenring 1 nach innen gebogen bzw. eingeklappt, sodass die Fahnen 6 etwa parallel zu den Klemmrampen verlaufen. Es ist aber auch möglich, zuerst die Feder-Haltenasen 5 um 90° abzuwinkeln und dann die Fahnen 6 umzubiegen. In nicht dargestellter Weise sind auch Biegewinkeln der Fahnen oder der Feder-Haltenasen, die von 90° abweichen, realisierbar.

In den fertig geformten Außenring 1 mit umgebogenen bzw. abgeknickten Fahnen 6 und Feder-Haltenasen 5 werden dann Nadel oder Rollen eingesetzt und der Freilauf auf einen Innenring mit glatter Außenfläche oder auf eine Welle mit glatter Außenfläche aufgesetzt. Weist an Stelle des Außenrings 1 ein Innenring die Klemmrampen 2 sowie einstückig angeformte Feder-Haltenasen 5 und Fahnen 6 als die Klemmrollen führende Käfigelemente auf, so werden diese Teile in einen Außenring mit glatter Innenoberfläche oder in ein massives Bauteil, beispielsweise in ein Gehäusebauteil mit geeigneter Bohrung mit gehärteter Oberfläche, eingesetzt und bilden damit den Freilauf.

Die vorstehenden Verlängerungslaschen 7 der Feder-Haltenasen 5 haben eine solche Erstreckung in Umfangsrichtig des Außenringes 1, dass sie den Nadeln oder Rollen einen hinreichenden axialen Halt gewährleisten. Entsprechendes gilt für die Ringschulter auf der gegenüberliegenden Seite der Klemmrampen 2 am Außenring 1.

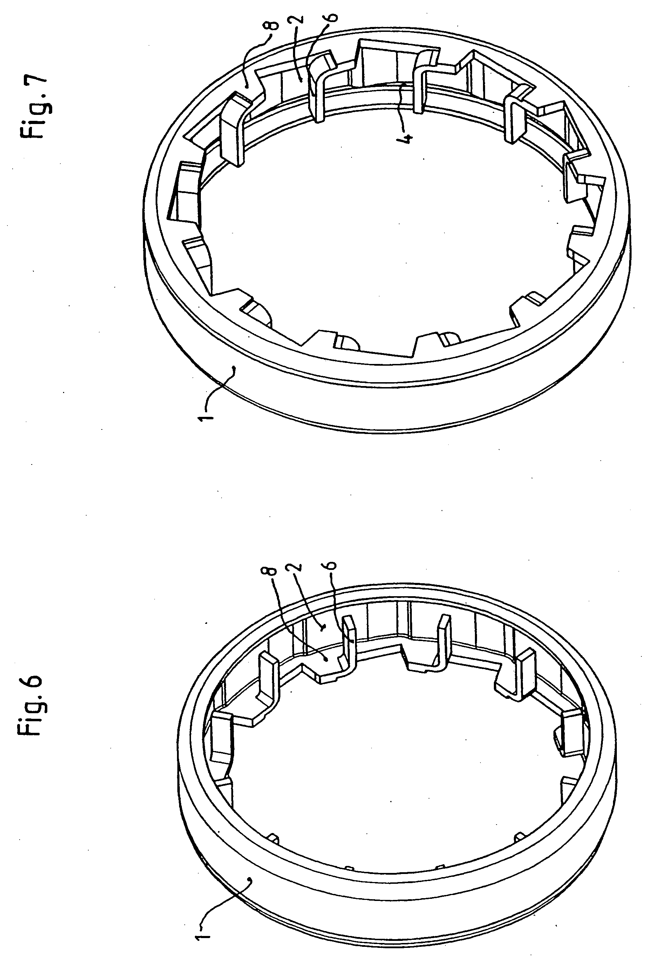

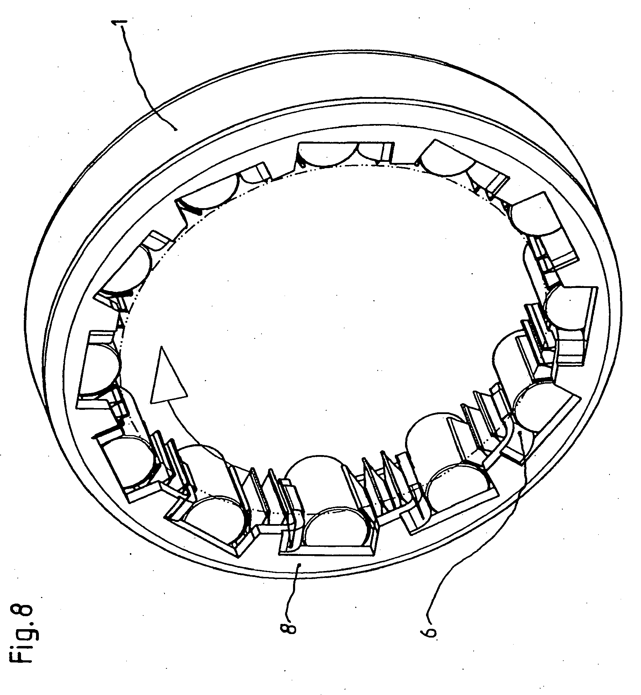

In dem Ausführungsbeispiel gemäß den Figuren 6 bis 8 wird der Außenring 1 mit einem Boden oder Bodenrand 8 durch Tiefziehen hergestellt. Aus dem Boden wird ggf. eine Kreisscheibe ausgestanzt. Weiterhin werden aus dem Bodenrand 8 die Fahnen 6 ausgeschnitten und diese parallel zu den Klemmrampen umgebogen. An der gegenüberliegenden Seite wird dann noch eine Ringschulter angeformt. Bei dieser Ausgestaltung bildet der Bodenrand 8 dadurch, dass nur die Fahnen ausgeschnitten werden, zwar eine gezackte, aber voll wirksame durchgehende Begrenzung, so dass eine gute Führung auch größerer Rollen gewährleistet ist, wie insbesondere aus Figur 8 ersichtlich ist.

### Bezugszeichenliste

- 1: Außenring
- 2: Klemmrampen
- 3: Rand
- 4: Rand
- 5: Feder-Haltenasen
- 6: Fahnen
- 7: Verlängerungslaschen
- 8: Bodenrand

## Patentansprüche

1. Hülsen-/Rollenfreilauf, mit zumindest einem Innen- oder Außenring (1), der den Nadeln oder Rollen angepasste Klemmrampen (2) aufweist, mit einem Käfig für die Nadeln oder Rollen und mit Andruckfedern, wobei der Käfig Käfigelemente aufweist, die mit dem Innen- oder Außenring (1) einstückig hergestellt sind, **dadurch gekennzeichnet, dass** die Käfigelemente als Feder- Haltenasen (5) ausgebildet und seitlich am Innen-oder Außenring (1) angebracht sind.

2. Hülsen-/Rollenfreilauf nach Anspruch 1, **dadurch gekennzeichnet, dass** die Feder-Haltenasen (5) freistehende Fahnen (6) aufweisen, die innerhalb oder außerhalb des Innen- oder Außenrings (1) den Klemmrampen (2) benachbart angeordnet sind.

3. Hülsen-/Rollenfreilauf nach einem der vorhergehenden Ansprüche, **dadurch gekennzeichnet, dass** der Innen- oder Außenring (1) an der den Feder-Haltenasen (5) abgewandten Seite eine Ringschulter aufweist.

4. Verfahren zum Herstellen eines Hülsen-/Rollenfreilaufs, nach einem der vorhergehenden Ansprüche, **dadurch gekennzeichnet,**
- **dass** der Innen- oder Außenring (1) mit den Klemmrampen (2) und zumindest einem auf einer Seite der Klemmrampen (2) angeordneten Rand (3) durch Tiefziehen hergestellt wird,
- **dass** aus dem Rand (3) Feder-Haltenasen (5) ausgeschnitten werden und
- **dass** die Feder-Haltenasen (5) radial zum Innen- oder Außenring (1) gebogen und die freistehenden Fahnen (6) der Feder-Haltenasen (5) in den Bereich der Klemmrampen (2) umgebogen werden.

5. Verfahren zum Herstellen eines Hülsen-/Rollenfreilaufs, insbesondere Käfigs, nach einem der Ansprüche 1 bis 3, **dadurch gekennzeichnet,**
- **dass** der Innen- oder Außenring (1) mit den Klemmrampen (2) als im Wesentlichen topfförmiges Bauteil durch Tiefziehen hergestellt wird,
- **dass** aus einem den Klemmrampen (2) benachbarten Bodenrand (8) die Fahnen (6) ausgeschnitten werden und
- **dass** die Fahnen (6) in den Bereich der Klemmrampen (2) umgebogen werden.

6. Verfahren nach einem der Ansprüche 4 oder 5, **dadurch gekennzeichnet,**
- **dass** an der dem Rand (3) oder dem Bodenrand (8) gegenüberliegenden Seite am Innen- oder Außenring (1) Ränder (4) angeformt sind und
- **dass** der Rand (4) als Ringschulter radial umgeformt wird.

7. Verfahren nach einem der vorhergehenden Ansprüche 4 bis 6, **dadurch gekennzeichnet, dass** der Innen- oder Außenring (1) auf beziehungsweise in einen Stützring eingepresst wird.

8. Verfahren nach einem der vorhergehenden Ansprüche 4 bis 7, **dadurch gekennzeichnet, dass** an dem Stützring, vorzugsweise vor dem Verpressen mit dem Innen- oder Außenring (1), ein radial nach innen oder außen vorstehender Bund angeformt wird.

## Claims

1. Sleeve-type/roller freewheel, having at least one inner or outer ring (1) which has clamping ramps (2) which are adapted to the needles or rollers, having a cage for the needles or rollers and having pressure springs, the cage having cage segments which are produced in one piece with the inner or outer ring (1), **characterized in that** the cage elements are configured as spring holding lugs (5) and are attached laterally to the inner or outer ring (1).

2. Sleeve-type/roller freewheel according to Claim 1, **characterized in that** the spring holding lugs (5) have exposed tabs (6) which are arranged inside or outside the inner or outer ring (1) in a manner which is adjacent to the clamping ramps (2).

3. Sleeve-type/roller freewheel according to one of the preceding claims, **characterized in that** the inner or outer ring (1) has an annular shoulder on the side which faces away from the spring holding lugs (5).

4. Method for producing a sleeve-type/roller freewheel according to one of the preceding claims, **characterized**
- **in that** the inner or outer ring (1) is produced by deep drawing with the clamping ramps (2) and at least one edge (3) which is arranged on one side of the clamping ramps (2),
- **in that** spring holding lugs (5) are cut out from the edge (3), and
- **in that** the spring holding lugs (5) are bent radially to the inner or outer ring (1) and the exposed tabs (6) of the spring holding lugs (5) are bent over into the region of the clamping ramps (2).

5. Method for producing a sleeve-type/roller freewheel, in particular a cage, according to one of Claims 1 to 3, **characterized**
- **in that** the inner or outer ring (1) is produced by deep drawing with the clamping ramps (2) as a substantially cup-shaped component,
- **in that** the tabs (6) are cut out from a base edge (8) which is adjacent to the clamping ramps (2), and
- **in that** the tabs (6) are bent over into the region of the clamping ramps (2).

6. Method according to either of Claims 4 and 5, **characterized**
- **in that** edges (4) are formed on the inner or outer ring (1) on the side which lies opposite the edge (3) or the base edge (8), and
- **in that** the edge (4) is formed over radially as an annular shoulder.

7. Method according to one of preceding Claims 4 to 6, **characterized in that** the inner or outer ring (1) is pressed onto or into a supporting ring.

8. Method according to one of preceding Claims 4 to 7, **characterized in that** a radially inwardly or outwardly protruding collar is formed integrally on the supporting ring, preferably before being pressed with the inner or outer ring (1).

## Revendications

1. Roue libre à douilles/rouleaux comprenant au moins une bague interne ou externe (1), qui présente des rampes de serrage (2) adaptées aux aiguilles ou aux rouleaux, avec une cage pour les aiguilles ou les rouleaux et avec des ressorts de pression, la cage présentant des éléments de cage qui sont fabriqués d'une seule pièce avec la bague interne ou externe (1), **caractérisée en ce que** les éléments de la cage sont réalisés sous forme de nez de retenue à ressort (5) et sont montés latéralement sur la bague interne ou externe (1).

2. Roue libre à douilles/rouleaux selon la revendication 1, **caractérisée en ce que** les nez de retenue à ressort (5) présentent des fanions autoportants (6), qui sont disposés à l'intérieur ou à l'extérieur de la bague interne ou externe (1) à côté des rampes de serrage (2).

3. Roue libre à douilles/rouleaux selon l'une quelconque des revendications précédentes, **caractérisée en ce que** la bague interne ou externe (1) présente un épaulement annulaire du côté opposé aux nez de retenue à ressort (5).

4. Procédé de fabrication d'une roue libre à douilles/rouleaux selon l'une quelconque des revendications précédentes, **caractérisé en ce que**
- la bague interne ou externe (1) est fabriquée par emboutissage profond avec les rampes de serrage (2) et au moins un bord (3) disposé du côté des rampes de serrage (2),
- des nez de retenue à ressort (5) sont découpés dans le bord (3) et
- les nez de retenue à ressort (5) sont cintrés radialement par rapport à la bague interne ou externe (1) et les fanions autoportants (6) des nez de retenue à ressort (5) sont recourbés dans la région des rampes de serrage (2).

5. Procédé de fabrication d'une roue libre à douilles/rouleaux, en particulier d'une cage, selon l'une quelconque des revendications 1 à 3,
**caractérisé en ce que**
- la bague interne ou externe (1) est fabriquée par emboutissage profond avec les rampes de serrage (2) en tant que composant sensiblement en forme de pot,
- les fanions (6) sont découpés à partir d'un bord de fond (8) adjacent aux rampes de serrage (2), et
- les fanions (6) sont recourbés dans la région des rampes de serrage (2).

6. Procédé selon l'une quelconque des revendications 4 ou 5, **caractérisé en ce que**
- du côté opposé au bord (3) ou au bord de fond (8), sur la bague interne ou externe (1), des bords (4) sont façonnés, et
- le bord (4) est mis en forme radialement sous forme d'épaulement annulaire.

7. Procédé selon l'une quelconque des revendications précédentes 4 à 6, **caractérisé en ce que** la bague interne ou externe (1) est pressée sur ou dans une bague de support.

8. Procédé selon l'une quelconque des revendications précédentes 4 à 7, **caractérisé en ce qu'**un épaulement saillant radialement vers l'extérieur ou vers l'intérieur est façonné sur la bague de support, de préférence avant le pressage avec la bague interne ou externe (1).
